# EUROPÄISCHE PATENTANMELDUNG

(11) **EP 2 821 768 A1**
(43) Veröffentlichungstag der Anmeldung: **07.01.2015**
(21) Anmeldenummer: 13003820.1
(22) Anmeldetag: 01.08.2013
(51) Int. Cl.: G01M 1/04, G01M 1/06

(54) **Elektromagnetischer Direktantrieb für eine Reifenauswuchtmaschine**

(30) Priorität: 05.07.2013 DE 202013006030 U
(71) Anmelder: Haweka AG, 30938 Burgwedel (DE)
(72) Erfinder: Warkotsch, Dirk, 30938 Burgwedel/Wettmar (DE)
(74) Vertreter: Von Rohr Patentanwälte Partnerschaft mbB

(57) **Zusammenfassung**

Dargestellt und beschrieben ist ein elektromagnetischer Direktantrieb (2) für die Wuchtspindel (14) einer Reifenauswuchtmaschine (1), mit einem Stator (8) und mit einem Rotor (9), wobei der Stator (8) und der Rotor (9) auf einer gleichen Achse befestigt sind und wobei der Rotor (9) koaxial zur Wuchtspindel (14) angeordnet und drehfest mit der Wuchtspindel (14) verbunden ist.

## Beschreibung

Die Erfindung betrifft einen elektromagnetischen Direktantrieb für die Wuchtspindel einer Reifenauswuchtmaschine und eine Reifenauswuchtmaschine.

Bei den aus dem Stand der Technik bekannten Reifenauswuchtmaschinen erfolgt der Antrieb der Wuchtspindel in der Regel mit einem externen Motor, wobei die Kraftübertragung vom Motor auf die Wuchtspindel über ein Riemenrad oder ein Kupplungsrad erfolgen kann.

Aus der DE 697 18 179 T3 ist beispielsweise eine Radauswuchtvorrichtung bekannt, die einen im Rahmen eingebauten Antriebsmotor aufweist, der über ein Schaltgetriebe eine Hauptwelle der Auswuchtmaschine bis zur erforderlichen Auswuchtgeschwindigkeit antreibt. Die Hauptwelle ist mit dem Schaltgetriebe von dem Antriebsmotor abkuppelbar, wenn die Hauptwelle bis zu der erforderlichen Auswuchtgeschwindigkeit angetrieben worden ist, um eine Bestimmung der Unwucht in dem Rad zu gestatten.

Aus der DE 203 08 066 U1 ist eine Vorrichtung zum Auswuchten eines Fahrzeugrades bekannt, die eine Spindel zum Aufstecken eines auszuwuchtenden Rades und einen Motor zum Antrieb der Spindel aufweist, um ein Rotieren des Rades zu bewirken. Der Spindel ist eine Messeinrichtung zugeordnet, um eine etwa vorhandene Unwucht während des Rotierens des Rades bzw. während eines Messlaufs der Spindel zu messen, und eine Auswerte- und Anzeigeeinrichtung zum Berechnen und Anzeigen der Unwucht und/oder der im Rad anzubringenden Ausgleichsgewichte. Zum Steuern des Motors ist eine Steuereinheit vorgesehen. Der Motor ist als Gleichstrom-Elektromotor ausgebildet, welcher über einen Riemen die Spindel antreibt.

Aufgabe der vorliegenden Erfindung ist es, einen verbesserten Antrieb für eine Wuchtspindel einer Reifenauswuchtmaschine und eine Reifenauswuchtmaschine zur Verfügung zu stellen, wobei der Antrieb die Übertragung eines großen Drehmomentes in konstruktiv- und steuerungstechnisch einfacher Weise zulässt und eine sehr genaue Unwuchtbestimmung möglich ist.

Zur Lösung der vorgenannten Aufgabe wird ein elektromagnetischer Direktantrieb für die Wuchtspindel einer Reifenauswuchtmaschine vorgeschlagen, der einen Stator und einen Rotor aufweist, wobei der Stator und der Rotor auf einer gleichen Achse befestigt sind und wobei der Rotor koaxial zur Wuchtspindel angeordnet und drehfest mit der Wuchtspindel verbunden ist. Eine derartige Ausgestaltung des Antriebs ermöglicht eine einfache und komfortable Steuerung sowie eine sehr exakte Unwuchtbestimmung. Darüber hinaus ist ein einfacher konstruktiver Aufbau möglich, was nachfolgend im Einzelnen erläutert wird.

Bei einer bevorzugten Ausführungsform der Erfindung ist der Stator innenliegend und der Rotor außenliegend angeordnet, wobei der Rotor um den Stator drehbar gelagert ist. Es ist zweckmäßig, wenn der Rotor in diesem Fall ein topfartiges, auf der innenliegenden, hinteren Stirnseite offenes zylindrisches Rotorgehäuse aufweist, wobei der Stator innerhalb von dem Rotorgehäuse angeordnet sein kann. An der Innenwand des Rotorgehäuses kann eine Mehrzahl von Permanentmagneten gleichmäßig angeordnet sein, während der innere Stator Erregerspulen für eine Fremderregung aufweisen kann. Wird Strom durch die Erregerspulen geleitet, baut sich ein Magnetfeld auf, das den Rotor antreibt. Zur Steuerung des Antriebs ist eine entsprechend ausgebildete Steuerungsschaltung vorgesehen. Grundsätzlich ist es aber auch möglich, dass der Stator Permanentmagneten und der Rotor Erregerspulen aufweist oder dass Erregerspulen am Stator und am Rotor vorgesehen sind. Es versteht sich, dass grundsätzlich auch ein umgekehrter Aufbau des Direktantriebs mit einem außenliegenden Stator und einem innenliegenden Rotor möglich ist.

Eine Weiterbildung des erfindungsgemäßen Direktantriebs sieht vor, dass eine mit dem Stator drehfest verbundene Statorwelle vorgesehen ist, wobei die Wuchtspindel als Rotorwellenbuchse bzw. in der Art einer Hülse ausgebildet ist und der Rotor insbesondere auf seiner außenliegenden, vorderen Stirnseite drehfest mit der Rotorwellenbuchse verbunden ist, wobei ein vorderer Abschnitt der Statorwelle von hinten bzw. auf der Innenseite des Rotors in die Rotorwellenbuchse eingeführt ist und wobei die Rotorwellenbuchse drehbar auf der Statorwelle gelagert ist. Eine derartige Ausgestaltung ermöglicht insbesondere eine sehr exakte Unwuchterfassung und zeichnet sich durch einen einfachen konstruktiven Aufbau aus. Alternativ ist es auch möglich, dass eine insbesondere auf der innenliegenden Stirnseite des Rotors drehfest mit dem Rotor verbundene Rotorwelle als Wuchtspindel und eine drehfest mit dem Stator verbundene Statorwellenbuchse vorgesehen sind, wobei die Rotorwelle durch die Statorwellenbuchse verläuft und die Statorwellenbuchse drehbar auf der Rotorwelle gelagert ist.

Die Wuchtspindel kann an ihrem vorderen Ende einen Befestigungsabschnitt zur drehfesten koaxialen Befestigung mit einer Spannvorrichtung mit Mittenzentrierung zur Befestigung einer Felge eines Fahrzeugrades aufweisen. Eine solche Spannvorrichtung ermöglicht das Zentrieren und Festziehen der Felge und die Übertragung einer hohen Zentrierkraft in einfacher Weise. Eine vorteilhafte Spannvorrichtung ist beispielsweise in der DE 10 2012 017 789 A1 im Einzelnen beschrieben. Hiermit wird das Dokument DE 10 2012 017 789 A1 vollständig in die Offenbarung der vorliegenden Erfindung einbezogen, was insbesondere für die in den Patentansprüchen der DE 10 2012 017 789 A1 näher bezeichneten Merkmale gilt, wobei die in den Patentansprüchen genannten Merkmale unabhängig voneinander, aber auch in einer beliebigen Kombination bei einer Spannvorrichtung der in Rede stehenden Art vorteilhaft vorgesehen sein können.

Die erfindungsgemäße Reifenauswuchtmaschine weist einen elektromagnetischen Direktantrieb der zuvor beschriebenen Art und eine Unwuchtmesseinrichtung ausgebildet zur Messung der während eines Messlaufs der Wuchtspindel auftretenden Unwuchtkräfte bzw. Schwingungen eines über die Wuchtspindel gedrehten Fahrzeugrades auf. Für eine sehr exakte Messung der Unwuchtkräfte ist hierbei vorgesehen, dass diese während des Messlaufs der Wuchtspindel in axialer Richtung der Wuchtspindel und in einer Richtung senkrecht dazu gemessen bzw. bestimmt werden. Die Unwuchtmesseinrichtung kann zu diesem Zweck wenigstens zwei Kraftmesswandler, insbesondere piezoelektrische Sensoren, aufweisen.

Eine zweckmäßige Ausgestaltung der Erfindung sieht vor, dass die Statorwelle, vorzugsweise an ihrem hinteren Ende, schwingfähig an einem Maschinenrahmen der Auswuchtmaschine befestigt ist. Ist, wie oben beschrieben, eine Statorwellenbuchse vorgesehen, durch die eine Rotorwelle als Wuchtspindel hindurchgeführt ist, ist die Statorwellenbuchse dementsprechend schwingfähig mit dem Maschinenrahmen verbunden. In beiden Fällen ist eine schwingfähige Anordnung des Rotors und damit der Wuchtspindel über die Statorwelle bzw. die Statorwellenbuchse an dem Maschinenrahmen der Auswuchtmaschine verwirktlicht.

Weiter vorzugsweise kann die Statorwelle über zwei symmetrisch gegenüberliegende und fest bzw. starr mit der Statorwelle verbundene Haltebleche an dem Maschinenrahmen befestigt sein. Die Haltebleche können mit der Statorwelle verschweißt sein. An ihren freien Enden können die Haltebleche an dem Maschinenrahmen verschraubt sein. Über die Haltebleche ist die Statorwelle schwingfähig an dem Maschinenrahmen gehalten. Das gleiche gilt entsprechend dann, wenn eine schwingfähige Statorwellenbuchse vorgesehen ist. Durch Verschweißen der Haltebleche an der Statorwelle bzw. der Statorwellenbuchse wird eine hohe Bauteilsteifigkeit der Anordnung von Statorwelle bzw. Statorwellenbuchse und Halteblechen erreicht, was zu einer höheren Messgenauigkeit beiträgt. Zudem ist eine stabile Lagerung der Statorwelle bzw. der Statorwellenbuchse gewährleistet.

Für eine hohe Messgenauigkeit bei der Unwuchtmessung kann vorzugsweise ein mit der Statorwelle im Kraftfluss stehendes längliches Druckteil vorgesehen sein, wobei das Druckteil senkrecht zur Statorwelle angeordnet ist und wobei die Kraftmesswandler derart mit dem freien Ende des Druckteils verbunden sind, dass die während eines Umlaufs der Wuchtspindel auftretenden Druckkräfte bzw. Schwingungen des Druckteils in axialer Richtung der Wuchtspindel und in einer Richtung senkrecht dazu messbar sind. Durch rechtwinklige Anordnung des Druckteils zur Statorwelle wird ein größtmöglicher Angriffswinkel für die auf die Kraftmesswandler wirkenden Drücke erzielt. Das Druckteil ist länglich ausgebildet und erstreckt sich vorzugsweise in radialer Richtung über den Außenrand des Rotors hinweg. Durch Verlagerung der (Druck-)Messpunkte für die Unwuchtmessung gegenüber der Statorwelle seitlich bzw. in radialer Richtung nach außen, ist eine sehr exakte Bestimmung der Unwucht möglich. In diesem Zusammenhang kann vorgesehen sein, dass ein freies Ende des vorzugsweise als Wellenabschnitt ausgebildeten Druckteils stirnseitig mit einem Druckbolzen verbunden ist, der koaxial zum Druckteil angeordnet ist und mit einem Drucksensor, insbesondere einem piezoelektrischen Sensor, zusammenwirkt, um eine axiale Schwingung bzw. Druckkräfte des Druckteils zu erfassen. Ein weiterer Druckbolzen kann senkrecht zum Druckteil angeordnet und mit dem freien Ende des ersten Druckbolzens oder auch direkt mit dem freien Ende des Druckteils verbunden sein, um Schwingungen senkrecht zur Längsachse des Druckteils bzw. Schwingungen in Längsrichtung der Statorwelle bzw. der Wuchtspindel zu bestimmen. Die Druckbolzen sind mit dem Maschinenrahmen starr verbunden, so dass die zuvor beschriebene Anordnung eine sehr genaue Bestimmung der Unwucht ermöglicht. Es versteht sich, dass bei einer erfindungsgemäßen Ausführungsform mit Statorwellenbuchse diese mit einem entsprechenden Druckteil verbunden sein kann.

Zur Übertragung einer in axialer Richtung wirkenden Bremskraft auf den Rotor kann eine Bremseinrichtung vorgesehen sein. Die Bremseinrichtung kann gegen eine Stirnseite des Rotors wirken und ein entsprechendes Bremsmittel aufweisen. Durch Übertragung der Bremskräfte lediglich in axialer Richtung des Rotors bzw. der Wuchtspindel wird zu einer sehr exakten Unwuchtmessung beigetragen.

Zur Bestimmung des Drehwinkels des Rotors und/oder der Drehzahl des Rotors können ein Drehlagesensor und/oder ein Drehzahlsensor vorgesehen sein. An dem Rotor kann ein nach innen gerichteter Zahnkranz als Kodierscheibe für eine photoelektrische Bestimmung der Winkellage des Rotors angeordnet sein. Die Zähne des Zahnkranzes ermöglichen dann die Bestimmung des Drehwinkels mittels einer entsprechend ausgebildeten elektrischen Baugruppe, die eine Lichtschranke aufweisen kann, wobei die Baugruppe Positionssignale erzeugt bei Unterbrechung der Lichtschranke durch die bei rotierendem Rotor an der Lichtschranke vorbeilaufenden Zähne. Alternativ kann ein Positionssensor(chip), wie ein Hall-Sensor, zur Messung des Drehwinkels vorgesehen sein.

Die vorgenannten Aspekte und Merkmale der vorliegenden Erfindung sowie die nachfolgend beschriebenen Aspekte und Merkmale der vorliegenden Erfindung können unabhängig voneinander, aber auch in einer beliebigen Kombination realisiert werden, auch wenn dies nicht im Einzelnen beschrieben ist.

Weitere Vorteile, Merkmale, Eigenschaften und Aspekte der vorliegenden Erfindung ergeben sich aus der folgenden Beschreibung einer bevorzugten Ausführungsform anhand der Zeichnungen. Es zeigen:
- Fig. 1: eine perspektivische Teilansicht einer erfindungsgemäßen Reifenauswuchtmaschine mit einem erfindungsgemäßen elektromagnetischen Direktantrieb und mit einer Spannvorrichtung mit Mittenzentrierung zur Befestigung einer nicht dargestellten Felge eines Fahrzeugrades schräg von vorne,
- Fig. 2: eine perspektivische Teilansicht der erfindungsgemäßen Reifenauswuchtmaschine aus Fig. 1 schräg von hinten,
- Fig. 3: eine perspektivische Teilansicht der erfindungsgemäßen Reifenauswuchtmaschine aus Fig. 1 mit Blick auf den Stator und den Rotor des elektromagnetischen Direktantriebs und
- Fig. 4: eine Teilansicht der erfindungsgemäßen Reifenauswuchtmaschine aus Fig. 1 im Längsschnitt, wobei die Schnittflächen nicht schraffiert dargestellt sind.

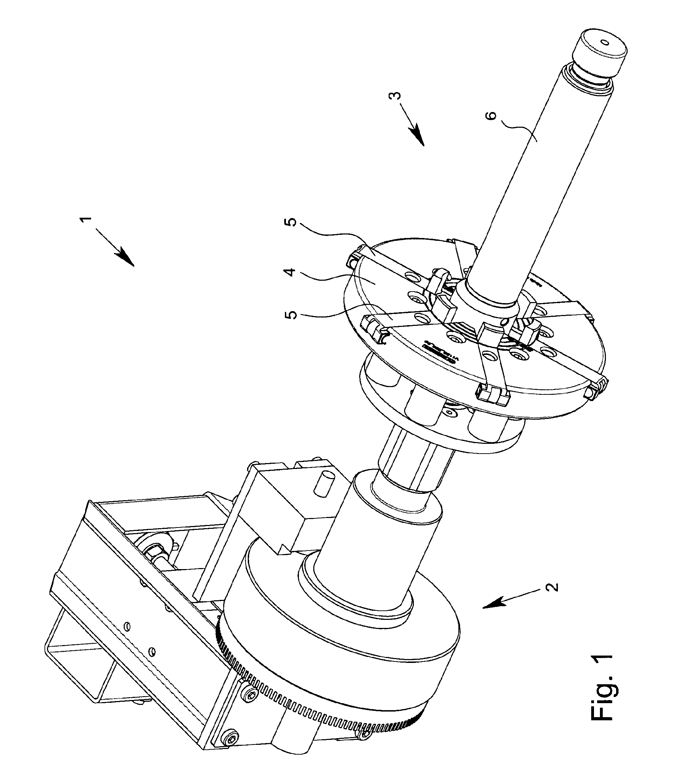

In den Figuren 1 bis 4 sind verschiedene Teilansichten einer erfindungsgemäßen Reifenauswuchtmaschine 1 gezeigt. Die Reifenauswuchtmaschine 1 weist einen elektromagnetischen Direktantrieb 2 auf und ist mit einer Spannvorrichtung 3 mit Mittenzentrierung zur Befestigung einer nicht dargestellten Felge eines Fahrzeugrades verbunden. Die Spannvorrichtung 3 ist in der DE 10 2012 017 789 A1 im Einzelnen beschrieben, wobei die Spannvorrichtung 3 einen Anlageflansch 4 mit mehreren am Anlageflansch 4 radial bewegbar geführten Zentrierelementen 5 zum zentrierenden Eingriff in ein Zentrierloch der Felge und eine axial zum Anlageflansch 4 bewegbar geführte Spannhülse 6 aufweist. Die Spannhülse 6 und die Zentrierelemente 5 sind derart kinematisch gekoppelt, dass eine axiale Bewegung der Spannhülse 6 zu einer radialen Bewegung der Zentrierelemente 5 führt.

Jedes Zentrierelement 5 kann über wenigstens einen Spannhebel 7 mit der Spannhülse 6 verbunden sein. Der Anlageflansch 4 weist auf der Seite der Felge sich über den gesamten Anlageflansch 4 in radialer Richtung erstreckende Radialnuten zur Führung der Zentrierelemente 5 auf. Nicht dargestellt ist, dass ein fest mit der Reifenauswuchtmaschine 1 verbindbares erstes Rohrteil vorgesehen ist, wobei der Anlageflansch 4 fest mit dem ersten Rohrteil verbunden und die Spannhülse 6 über wenigstens einen Gleitabschnitt axial bewegbar auf dem ersten Rohrteil geführt ist und wobei die Spannhülse 6 und die Zentrierelemente 5 derart kinematisch gekoppelt sind, dass eine axiale Bewegung der Spannhülse 6 relativ zu dem ortsfest an dem Rohrteil festgesetzten Anlageflansch 4 zu einer radialen Bewegung der Zentrierelemente 5 führt. Die Hebelverbindung zwischen den Zentrierelementen 5 und der Spannhülse 6 erfolgt hierbei durch Öffnungen in dem Anlageflansch 4 hindurch. Zu weiteren Merkmalen der Spannvorrichtung 3 wird auf den Offenbarungsgehalt der DE 10 2012 017 789 A1 verwiesen.

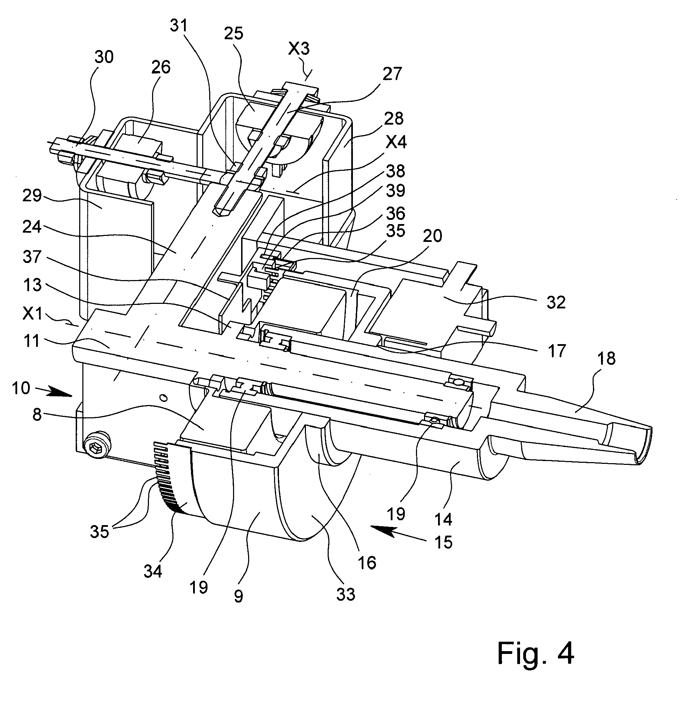

Wie sich insbesondere aus Fig. 4 ergibt, weist der elektromagnetische Direktantrieb 2 einen innenliegenden Stator 8 und einen außenliegenden Rotor 9 auf. Der Rotor 9 ist als topfartiges, auf der innenliegenden Stirnseite 10 offenes zylindrisches Rotorgehäuse ausgebildet und der Stator 8 ist innerhalb von dem Rotorgehäuse angeordnet.

Der Stator 8 ist mit einer Statorwelle 11 drehfest verbunden, wobei die Statorwelle 11 zu diesem Zweck eine Ringschulter 13 aufweist, mit der der Stator 8 über nicht dargestellte Schrauben verschraubt und drehfest verbunden sein kann.

Der Rotor 9 ist seinerseits drehfest mit einer Wuchtspindel 14 verbunden, wobei die Wuchtspindel 14 als Rotorwellenbuchse ausgebildet ist bzw. einen entsprechend ausgebildeten hülsenartigen Abschnitt aufweist. Der Rotor 9 weist auf seiner außenliegenden Stirnseite 15 eine Ringschulter 16 auf, die gegen einen Ringabsatz 17 der Wuchtspindel 14 anliegt. Der Rotor 9 kann mit der Wuchtspindel 14 in diesem Bereich verschweißt sein. Wie sich weiter aus Fig. 4 ergibt, ist ein vorderer Abschnitt der Statorwelle 11 von hinten in die als Rotorwellenbuchse ausgebildete Wuchtspindel 14 eingeführt, wobei die Wuchtspindel 14 drehbar auf der Statorwelle 11 gelagert ist. Hierzu sind schematisch dargestellte Kugellager 19 vorgesehen.

Die Wuchtspindel 14 weist an ihrem außenliegenden Ende einen konisch zulaufenden Befestigungsabschnitt 18 zur drehfesten koaxialen Befestigung mit der Spannvorrichtung 3 auf.

Nicht dargestellt ist, dass der Rotor 9 an der Innenwand 20 eine Mehrzahl von Permanentmagneten aufweist, während der Stator 8 auf seiner Außenseite Erregerspulen aufweist, die mit einer nicht dargestellten Steuerschaltung ansteuerbar sind, um den Rotor 9 und damit die Wuchtspindel 14 anzutreiben.

Die Statorwelle 11 ist im Bereich ihres innenliegenden Endes schwingfähig an einem Maschinenrahmen der Reifenauswuchtmaschine 1 befestigt. Zu diesem Zweck sind zwei Haltebleche 21 symmetrisch gegenüberliegend auf der Statorwelle 11 angeschweißt. Die Mittellängsachse X1 durch beide Haltebleche 21 verläuft dabei senkrecht zur Mittellängsachse X2 der Statorwelle 11. Mit den anderen Enden sind die Haltebleche 21 mit zwei Rahmenteilen 22, 23 des Maschinenrahmens verschraubt. Dadurch ist eine stabile schwingfähige Befestigung der Statorwelle 11 an dem Maschinenrahmen verwirklicht.

Im Übrigen ist ein mit der Statorwelle 11 im Kraftfluss stehendes längliches und vorzugsweise zylindrisch ausgebildetes Druckteil 24 vorgesehen, wobei das Druckteil 24 fest mit der Statorwelle 11 verbunden, insbesondere verscheißt, ist. Eine Mittellängsachse X3 des Druckteils 24 verläuft dabei senkrecht zur Mittellängsachse X1 der Statorwelle 11. Um eine mögliche Unwucht beim Rotieren eines auf der Spannhülse 6 festgesetzten Rades während eines Messlaufs der Wuchtspindel 14 zu bestimmen, sind zwei Piezosensoren 25, 26 vorgesehen. Über einen ersten Druckbolzen 27 ist der erste Piezosensor 25 mit einem Rahmenteil 28 des Maschinenrahmens über entsprechende Befestigungsmittel starr verbunden. Der erste Druckbolzen 27 ist mit einem Ende in das Druckteil 24 stirnseitig eingeschraubt und derart gekoppelt, dass Schwingungen der Wuchtspindel 14 über die Statorwelle 11 und das Druckteil 24 in Richtung der Längsachse X3 des Druckteils 24 an den Druckbolzen 27 übertragen und von dem ersten Piezosensor 25 erfasst werden. Der erste Druckbolzen 27 und das Druckteil 24 sind dazu koaxial angeordnet.

Darüber hinaus ist ein weiteres Rahmenteil 29 vorgesehen, das die Rahmenteile 22, 23 miteinander verbindet. Der zweite Piezosensor 26 ist über einen zweiten Druckbolzen 30 mit dem Rahmenteil 29 Maschinenrahmens über entsprechende Befestigungsmittel starr verbunden. Mit einem Ende ist der zweite Druckbolzen 30 mit dem ersten Druckbolzen 27 gekoppelt, so dass mit dem zweiten Piezosensor 26 bei einem Messlauf der Wuchtspindel 14 auftretende Unwuchtkräfte in Richtung der Längsachse X4 des zweiten Druckbolzens 30 bzw. in Richtung der Längsachse X1 der Statorwelle 11 und senkrecht zur Längsachse X3 des Druckteils 24 über den zweiten Druckbolzen 30 messbar sind. Vorzugsweise kann der erste Druckbolzen 27 den zweiten Druckbolzen 30 durchsetzen, wobei die Position des zweiten Druckbolzens 30 mit einem Feststellmittel 31 in Richtung der Längsachse X₃ des Druckteils 24 festgelegt ist und wobei das Ende des zweiten Druckbolzens 30 zwischen dem Druckteil 24 und dem Feststellmittel 31 eingespannt ist.

Damit wird eine hohe Grundfestigkeit der Anordnung von Piezosensoren 25, 26 am Maschinenrahmen und der Verbindung der Piezosensoren 25, 26 mit dem Druckteil 24 erreicht. Durch die gezeigte Anordnung ist es möglich, die während eines Umlaufs der Wuchtspindel 14 auftretenden Unwuchtkräfte in axialer Richtung der Wuchtspindel 14 und senkrecht dazu zu messen.

Das von der Statorwelle 11 abgewandte Ende des Druckteils 24 kann sich in radialer Richtung über den Rotor 9 hinaus nach außen erstrecken. Im Ergebnis werden die Druckmessstellen in radialer Richtung gegenüber der Statorwelle 11 nach außen verlagert, was eine sehr genaue Bestimmung der Unwucht beim Rotieren der Wuchtspindel 11 zulässt.

Zur Übertragung einer in axialer Richtung der Wuchtspindel 14 wirkenden Bremskraft auf den Rotor 9 ist eine Bremseinrichtung 32 vorgesehen. Diese wirkt mit einem nicht dargestellten Bremsmittel gegen eine Ringfläche 33 auf der außenliegenden Stirnseite des Rotors 9.

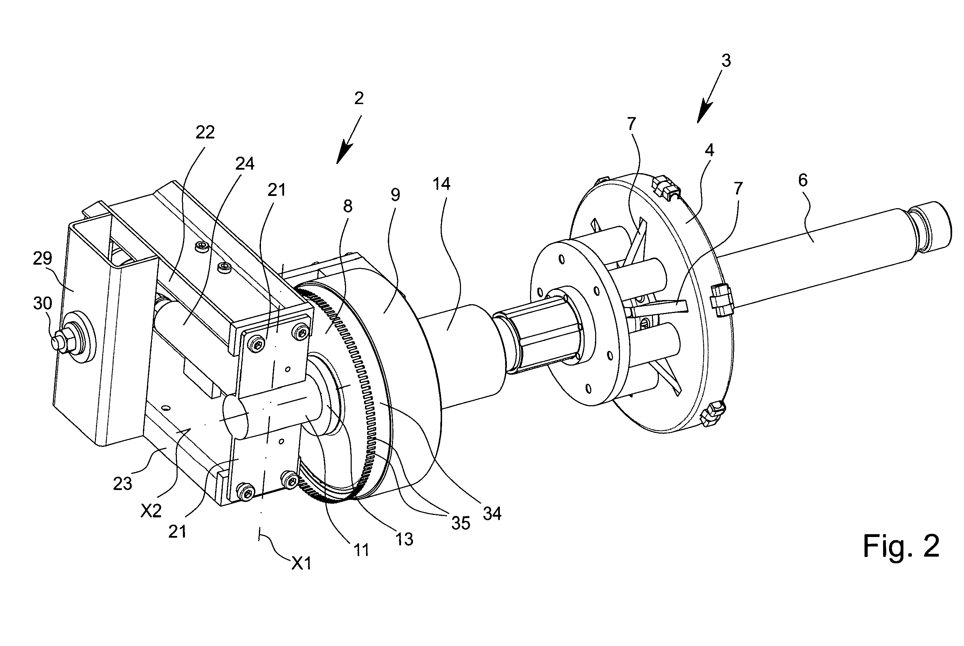

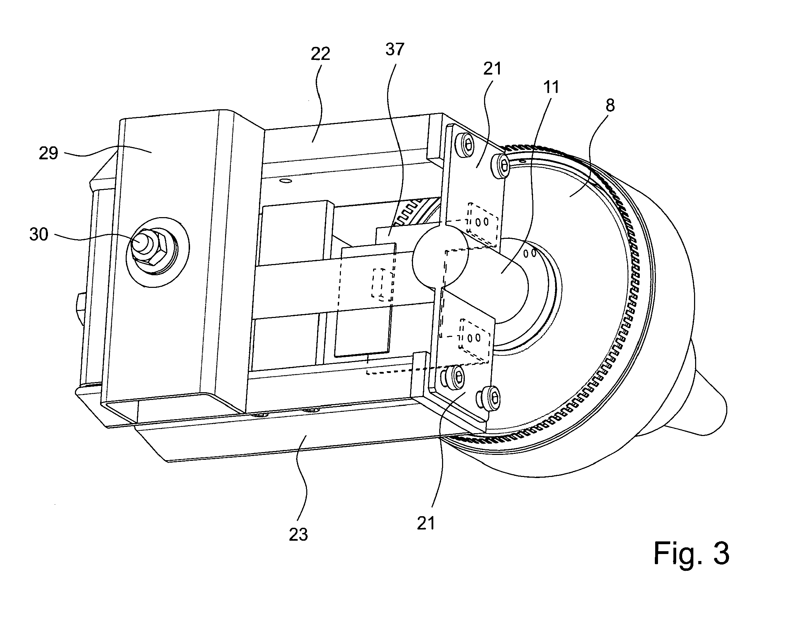

Wie sich insbesondere aus den Fig. 2 bis 4 ergibt, weist der Rotor 9 auf seiner innenliegenden Stirnseite 10 einen Zahnkranz 34 mit einer Mehrzahl von Zähnen 35 und einem außenliegenden weiteren Zahn 36 auf. Der Zahnkranz 34 bildet eine Kodierscheibe, die mit einer elektrischen Baugruppe zusammenwirkt, die auf einer Platine 37 festgesetzt ist. Die Platine 37 ist mit den beiden Halteblechen 21 verschraubt. Dies ist in Fig. 3 gezeigt. Die elektrische Baugruppe kann eine photoelektrische Messeinrichtung mit Lichtschranke umfassen, wobei Signale erzeugt werden, wenn die Lichtschranke durch die bei rotierendem Rotor 9 vorbeilaufenden Zähne 35 unterbrochen wird. Der weitere Zahn 36 dient zur Bestimmung einer Null- bzw. Referenzstellung des Rotors 9. Die Lichtschranke ist im Bereich von Nuten 38, 39 vorgesehen, wobei die erzeugten Positionssignale die Bestimmung des Drehwinkels des Rotors 9 und damit der Wuchtspindel 14 zulassen. Es versteht sich, dass an der Stelle eines photoelektrischen Messsystems auch ein Positionssensorchip vorgesehen sein kann.

Der dargestellte elektromagnetische Direktantrieb 2 ermöglicht die Übertragung hoher Drehmomente auf die Wuchtspindel 14 in konstruktiv und steuerungstechnisch einfacher Weise. Die gezeigte Anordnung von Kraftmesswandlern zur Bestimmung von Schwingungen, die bei einem Messlauf der Wuchtspindel 14 bei rotierendem Rad auftreten können, lässt eine sehr exakte Bestimmung der Unwucht zu.

## Patentansprüche

1. Elektromagnetischer Direktantrieb (2) für die Wuchtspindel (14) einer Reifenauswuchtmaschine (1), mit einem Stator (8) und mit einem Rotor (9), wobei der Stator (8) und der Rotor (9) auf einer gleichen Achse befestigt sind und wobei der Rotor (9) koaxial zur Wuchtspindel (14) angeordnet und drehfest mit der Wuchtspindel (14) verbunden ist.

2. Elektromagnetischer Direktantrieb (2) nach Anspruch 1, **dadurch gekennzeichnet, dass** der Stator (8) innenliegend und der Rotor (9) außenliegend angeordnet ist.

3. Elektromagnetischer Direktantrieb (2) nach Anspruch 1 oder 2, **dadurch gekennzeichnet, dass** der Rotor (9) als topfartiges auf der innenliegenden Stirnseite (10) offenes zylindrisches Rotorgehäuse ausgebildet ist und der Stator (8) innerhalb von dem Rotorgehäuse angeordnet ist.

4. Elektromagnetischer Direktantrieb (2) nach einem der vorhergehenden Ansprüche, **dadurch gekennzeichnet, dass** eine mit dem Stator (8) drehfest verbundene Statorwelle (11) vorgesehen ist, wobei die Wuchtspindel (14) als Rotorwellenbuchse ausgebildet ist und der Rotor (9) drehfest mit der Rotorwellenbuchse verbunden ist, wobei ein vorderer Abschnitt der Statorwelle (11) von hinten in die Rotorwellenbuchse eingeführt ist und wobei die Rotorwellenbuchse drehbar auf der Statorwelle (11) gelagert ist.

5. Elektromagnetischer Direktantrieb (2) nach einem der vorhergehenden Ansprüche, **dadurch gekennzeichnet, dass** die Wuchtspindel (14) an ihrem vorderen Ende einen Befestigungsabschnitt (18) zur drehfesten koaxialen Befestigung mit einer Spannvorrichtung (3) mit Mittenzentrierung zur Befestigung einer Felge eines Fahrzeugrades aufweist.

6. Reifenauswuchtmaschine (1) mit einem elektromagnetischen Direktantrieb (2) nach einem der vorhergehenden Ansprüche und mit einer Unwuchtmesseinrichtung, wobei die Unwuchtmesseinrichtung wenigstens zwei Kraftmesswandler, insbesondere piezoelektrische Sensoren (25, 26), zur Messung der während eines Messlaufs der Wuchtspindel (14) auftretenden Unwuchtkräfte in axialer Richtung der Wuchtspindel (14) und in einer Richtung senkrecht dazu aufweist.

7. Reifenauswuchtmaschine (1) nach Anspruch 6, **dadurch gekennzeichnet, dass** die Statorwelle (11) schwingfähig an einem Maschinenrahmen der Auswuchtmaschine (1) befestigt ist.

8. Reifenauswuchtmaschine (1) nach Anspruch 6 oder 7, **dadurch gekennzeichnet, dass** die Statorwelle (11) über zwei symmetrisch gegenüberliegend angeordnete und fest mit der Statorwelle (11) verbundene Haltebleche (21) an dem Maschinenrahmen befestigt ist.

9. Reifenauswuchtmaschine (1) nach einem der vorhergehenden Ansprüche, **dadurch gekennzeichnet, dass** ein mit der Statorwelle (11) im Kraftfluss stehendes längliches Druckteil (24) vorgesehen ist, wobei das Druckteil (24) senkrecht zur Statorwelle (11) angeordnet und fest mit der Statorwelle (11) verbunden ist und wobei die Kraftmesswandler derart mit dem freien Ende des Drucksteils (24) verbunden sind, dass die während eines Messlaufs der Wuchtspindel (14) auftretenden Druckkräfte des Druckteils in axialer Richtung des Drucksteils (24) und in einer Richtung senkrecht dazu messbar sind.

10. Reifenauswuchtmaschine (1) nach einem der vorhergehenden Ansprüche, **dadurch gekennzeichnet, dass** eine Bremseinrichtung (32) zur Übertragung einer in axialer Richtung wirkenden Bremskraft auf den Rotor (9) vorgesehen ist.

11. Reifenauswuchtmaschine (1) nach einem der vorhergehenden Ansprüche, **dadurch gekennzeichnet, dass** wenigstens ein Drehlagesensor und/oder ein Drehzahlsensor zur Bestimmung des Drehwinkels des Rotors (9) bzw. der Drehzahl des Rotors (9) vorgesehen ist.
